# EUROPEAN PATENT APPLICATION

(11) **EP 1 971 037 A2**
(43) Date of publication of application: **17.09.2008**
(21) Application number: 08101844.2
(22) Date of filing: 21.02.2008
(51) Int. Cl.: H04B 1/52

(54) **Radio communication apparatus**

(30) Priority: 16.03.2007 JP 2007068891
(71) Applicant: Fujitsu Ltd., Kawasaki-shi, Kanagawa 211-8588 (JP)
(72) Inventor: Morita, Junya, Kawasaki-shi, Kanagawa 211-8588 (JP); Watanabe, Shin, Kawasaki-shi, Kanagawa 211-8588 (JP)
(74) Representative: Stebbing, Timothy Charles

(57) **Abstract**

A radio communication apparatus (100) that transmits and receives a signal via an antenna duplexer (121), the apparatus including a dividing unit (115) that divides part of a transmitting signal to be transmitted via the antenna duplexer. Also included is a conversion unit (133, 134) that converts a receiving signal of a first frequency band received via the antenna duplexer (121) into a second frequency band lower than the first frequency band. In addition, the apparatus includes an extraction unit converting a noise component of the first frequency band included in the transmitting signal divided by the dividing unit into the second frequency band and extracting the noise component. Moreover, the apparatus includes an inversion unit that inverts the phase of the noise component extracted by the extraction unit. Also included is a combining unit that combines the receiving signal converted by the conversion unit and the noise component inverted by the inversion unit.

## Description

This application is related to and claims priority of Japanese Patent Application No. JP 2007-068891, filed on March 16, 2007.

The invention relates to a radio communication apparatus that transmits and receives a signal via an antenna duplexer, and more particularly to a radio communication apparatus allowing miniaturization to be achieved.

In duplex-type radio communication apparatuses that simultaneously transmit and receive a signal, there is used a duplexer that allows sharing of a single antenna between transmission and reception. Generally, a duplexer is an element having three terminals: one terminal is connected to an antenna, and the other two terminals are connected to a transmitting circuit and a receiving circuit, respectively. Accordingly, the duplexer allows the single antenna to be shared between the transmitting circuit and receiving circuit.

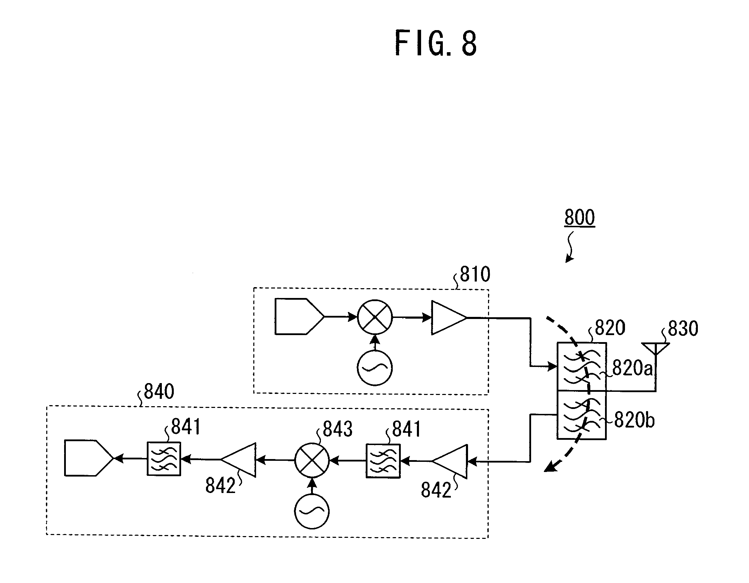

As illustrated in FIG. 8, a radio communication apparatus 800 includes a transmitting unit 810, duplexer 820, antenna 830 and receiving unit 840. The transmitting unit 810 outputs a transmitting signal via the duplexer 820 to the antenna 830. The receiving unit 840 receives a signal via the duplexer 820 from the antenna 830.

The duplexer 820 includes, in its transmitting unit 810 side, a filter 820a which allows passage of only signal components of the transmitting signal band; and the duplexer 820 includes, in its receiving unit 840 side, a filter 820b which allows passage of only signal components of the receiving signal band. Accordingly, in the radio communication apparatus 800, the single antenna 830 can be shared between the transmitting unit 810 and receiving unit 840.

The receiving unit 840 includes a filter 841, low-noise amplifier 842, and mixer 843. The filter 841 extracts only signal components of the receiving signal band. Accordingly, the receiving unit 840 eliminates a noise included in a receiving signal received via the antenna 830. The low-noise amplifier 842 amplifies the receiving signal received via the antenna 830. The mixer 843 multiplies the receiving signal by a predetermined-frequency signal and thereby converts the receiving signal band.

Japanese Laid-Open Patent Publication No. 11-308143 has disclosed a configuration that, in order to prevent the low-noise amplifier 842 of the receiving unit 840 from being saturated by a transmitting signal leak, reduces the transmitting signal leak by use of an analog approach in the RF (Radio Frequency) frequency band.

Also, Japanese Laid-Open Patent Publication No. 2003-273770 has disclosed a configuration that, in order to prevent the low-noise amplifier 842 or mixer 843 of the receiving unit 840 from being saturated by a transmitting signal leak, reduces the transmitting signal leak by use of an analog approach in the RF frequency band.

One aspect of the invention provides a radio communication apparatus that can improve the receiving sensitivity and power efficiency without increasing the size of the apparatus.

The invention is not intended to be limited to the aforementioned aspect. Accordingly, other aspects of the embodiment are operable to obtain functions and effects from constructions according the later-described preferred embodiments that cannot be obtained from conventional technologies.

According to one aspect of the invention, a radio communication apparatus that transmits and receives a signal via an antenna duplexer is disclosed. The apparatus includes a dividing unit dividing part of a transmitting signal to be transmitted via the antenna duplexer. Also included is a conversion unit converting a receiving signal of a first frequency band received via the antenna duplexer into a second frequency band lower than the first frequency band. Moreover, an extraction unit is included to convert a noise component of the first frequency band included in the transmitting signal divided by the dividing unit into the second frequency band and extracting the noise component. In addition, an inversion unit inverts the phase of the noise component extracted by the extraction unit. Finally, a combining unit combines the receiving signal converted by the conversion unit and the noise component inverted by the inversion unit.

Reference is made, by way of example only, to the accompanying drawings in which:
FIG. 1 is a block diagram illustrating a configuration of a radio communication apparatus according to a first embodiment;
FIG. 2 is a view illustrating a transmitting signal in the radio communication apparatus according to the first embodiment;
FIG. 3 is a block diagram illustrating a variation of the configuration of the radio communication apparatus according to the first embodiment;
FIG. 4 is a block diagram illustrating a configuration of a radio communication apparatus according to a second embodiment;
FIG. 5 is a block diagram illustrating a configuration of a radio communication apparatus according to a third embodiment;
FIG. 6 is a block diagram illustrating a configuration of a radio communication apparatus according to a fourth embodiment;
FIG. 7 is a block diagram illustrating a variation of the configuration of the radio communication apparatus according to the fourth embodiment; and
FIG. 8 is a block diagram illustrating an exemplary configuration of a radio communication apparatus according to another embodiment.

Preferred embodiments of a radio communication apparatus according to the present apparatus will be described in detail below with reference to the accompanying drawings.

According to the aforementioned related art, noise of the same band as the receiving signal included in the transmitting signal may leak via the filter 820b of the duplexer 820 to the receiving unit 840 side. Further, according to the above related art, noise of the same band as the receiving signal passes through the filter 841 of the receiving unit 840; thus, when this noise leaks to the receiving unit 840 side, the receiving sensitivity in the receiving unit 840 deteriorates.

In order to solve the above problem, the attenuation of the filter 820b of the duplexer 820 may be increased. However, the increase in the attenuation requires an increase in the number of resonators in the duplexer 820, thereby increasing the size of the duplexer 820. Accordingly, there arises a problem that the size of the radio communication apparatus 800 in which the duplexer 820 is used increases. Also, when the number of resonators in the duplexer 820 is increased, transmitting signal power loss increases, which is turn lowers the power efficiency of the radio communication apparatus 800.

### Embodiment 1

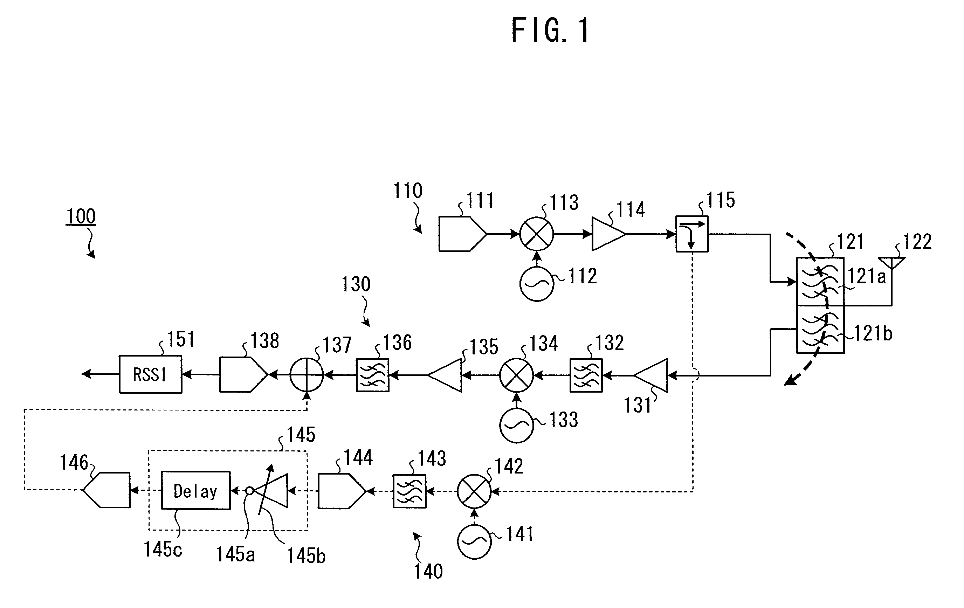

According to a first embodiment, as illustrated in FIG. 1, a radio communication apparatus 100 includes a transmitting unit 110, duplexer 121, antenna 122, receiving unit 130, cancel signal generation unit 140, and RSSI (Received Signal Strength Indicator) 151. For example, the radio communication apparatus 100 transmits a transmitting signal of a band of 2140 plus/minus 10 MHz, and receives a signal of a band of 1950 plus/minus 30 MHz (first frequency band). In the following description, numerical values such as frequency, transmitting signal band and receiving signal band are only exemplary, and other numerical values are possible.

According to this embodiment, the transmitting unit 110 includes a DA (Digital-Analog) converter 111, local oscillator circuit 112, quadrature modulation unit 113, power amplifier 114 and divider 115. The DA converter 111 converts a transmitting signal to be transmitted by the radio communication apparatus 100 into an analog signal and outputs the analog signal to the quadrature modulation unit 113.

The local oscillator circuit 112 preferably generates a carrier wave of a transmitting signal frequency (2140 MHz) of the radio communication apparatus 100 and outputs the carrier wave to the quadrature modulation unit 113. The quadrature modulation unit 113 modulates the carrier wave outputted from the local oscillator circuit 112 based on the transmitting data outputted from the DA converter 111; the quadrature modulation unit 113 outputs the modulated transmitting signal to the power amplifier 114.

Moreover, the power amplifier 114 amplifies the transmitting signal outputted from the quadrature modulation unit 113 and outputs the amplified signal to the divider 115. The divider 115 (dividing unit) divides the transmitting signal outputted from the power amplifier 114; the divider 115 outputs one of the dividing transmitting signals to the duplexer 121 and the other one, to the mixer 142. The divider 115 may be, for example, a directional coupler.

It is desirable for the duplexer 121 to output the transmitting signal outputted from the divider 115 to the antenna 122. Also, the duplexer 121 outputs a receiving signal outputted from the antenna 122 to the receiving unit 130. Here, the duplexer 121 is an antenna duplexer which allows sharing of the antenna 122 between transmission and reception.

The duplexer 121 includes a filter 121a which allows only a signal component of a transmitting signal band (2140 plus/minus 10 MHz) to the transmitting unit 110 side. Also, the duplexer 121 includes a filter 121b which allows only a signal component of a receiving signal band (1950 plus/minus 30 MHz) to the receiving unit 130 side.

The transmitting signal of 2140 plus/minus 10 MHz outputted from the duplexer 121 is wirelessly transmitted via the antenna 122 to another radio communication apparatus. Also, a signal of 1950 plus/minus 30 MHz wirelessly transmitted from another radio communication apparatus is received via the antenna 122. The antenna 122 outputs the receiving signal that is received by the duplexer 121.

In one embodiment, the receiving unit 130 includes a low-noise amplifier 131, RF bandpass filter 132, local oscillator circuit 133, mixer 134, low-noise amplifier 135, IF bandpass filter 136, signal combining unit 137 and AD converter 138. The low-noise amplifier 131 may amplify the receiving signal outputted from the duplexer 121 and output the receiving signal to the RF bandpass filter 132.

Preferably, the RF bandpass filter 132 extracts only a signal component of the receiving signal band (1950 plus/minus 30 MHz) from the receiving signal outputted from the low-noise amplifier 131. The RF bandpass filter 132 outputs the extracted receiving signal to the mixer 134. The local oscillator circuit 133 and mixer 134 constitute a converter (conversion unit) which down-converts the RF-band receiving signal outputted from the RF bandpass filter 132 into an IF (Intermediate Frequency) band (second frequency band).

For the purposes of the following discussion, assume that the local oscillator circuit 133 and mixer 134 convert the receiving signal from 1950 plus/minus 30 MHz to f1 plus/minus 30 MHz. The local oscillator circuit 133 generates a signal of frequency f2 (1950 MHz - f1) and outputs the signal to the mixer 134. The mixer 134 then multiplies the receiving signal outputted from the RF bandpass filter 132 by the signal outputted from the local oscillator circuit 133 and outputs the resultant signal to the low-noise amplifier 135.

Here, the receiving signal outputted from the mixer 134 after multiplication includes a sum component (1950 + f2 ± 30 MHz) and a difference component (f1 ± 30 MHz) between the receiving signal frequency (1950 plus/minus 30 MHz) outputted from the RF bandpass filter 132 and the signal frequency (f2) outputted from the local oscillator circuit 133.

It is desirable for the low-noise amplifier 135 to amplify the receiving signal outputted from the mixer 134 and outputs the receiving signal to the IF bandpass filter 136. The IF bandpass filter 136 extracts only the above difference component from the receiving signal outputted from the low-noise amplifier 135 and outputs the extracted signal to the signal combining unit 137. As a result, the receiving signal is down-converted. The IF bandpass filter 136 is a filter that allows passage of only a signal component of, for example, f1 plus/minus 10 MHz.

The signal combining unit 137 (combining unit) combines (adds) the receiving signal outputted from the IF bandpass filter 136 and a noise component outputted from the DA converter 146 and outputs the resultant signal to the AD converter 138. The AD converter 138 (demodulation unit) applies demodulation to the receiving signal outputted from the signal combining unit 137 and converts the resultant signal into a digital signal.

The AD converter 138 outputs the converted receiving signal to the RSSI 151. The RSSI 151 measures the power of the receiving signal outputted from the AD converter 138. Particularly, the RSSI 151 measures the power of a noise component included in the receiving signal.

The cancel signal generation unit 140 includes a local oscillator circuit 141, mixer 142, IF bandpass filter 143, AD converter 144, signal adjuster 145, and DA converter 146. The local oscillator circuit 141 and mixer 142 comprise a converter that down-converts the RF-band transmitting signal outputted from the divider 115 into an IF band.

The local oscillator circuit 141 generates a signal of the same frequency (f2) as the signal generated by the local oscillator circuit 133 and outputs the signal to the mixer 142. Then, the mixer 142 multiplies the transmitting signal outputted from the divider 115 and the signal outputted from the local oscillator circuit 141 and outputs the resultant signal to the IF bandpass filter 143.

Here, the transmitting signal outputted from the mixer 142 after multiplication includes a sum component and a difference component between the transmitting signal frequency (2140 MHz) outputted from the divider 115, and the signal frequency (f2) outputted from the local oscillator circuit 141. The noise of the same band (1950 plus/minus 30 MHz) as the receiving signal included in the transmitting signal is converted into a sum component (1950 + f2 ± 30 MHz) and a difference component (f1 plus/minus 30 MHz).

The IF bandpass filter 143 extracts only a signal component of the same band (f1 plus/minus 10 MHz) as the band that can pass through the RF bandpass filter 136, from the transmitting signal outputted from the mixer 142, and outputs the extracted signal to the AD converter 144. That is, the IF bandpass filter 143 extracts a noise component of the same band (f1 plus/minus 10 MHz) as the receiving signal processing band included in the transmitting signal. Accordingly, the noise component is extracted while being down-converted.

The AD (Analog-Digital) converter 144 converts the noise component outputted from the IF bandpass filter 143 into a digital signal and outputs the digital signal to the signal adjuster 145. The signal adjuster 145 includes a phase inverter 145a. The phase inverter 145a inverts the phase of the noise component outputted from the AD converter 144 and outputs the resultant signal to the DA converter 146.

According to one aspect, the signal adjuster 145 comprises a digital circuit such as FPGA (Field Programmable Gate Array). The DA converter 146 converts the signal component outputted from the signal adjuster 145 into an analog signal and outputs the analog signal to the signal combining unit 137.

Also, the signal adjuster 145 includes an amplitude adjuster 145b and delay adjuster 145c. The amplitude adjuster 145b and delay adjuster 145c perform noise component calibration. The amplitude adjuster 145b adjusts the amplitude of the noise component outputted from the AD converter 144 to the amplitude of a noise component of the transmitting signal which leaks from the divider 115 via the duplexer 121 to the signal combining unit 137.

More specifically, the amplitude adjuster 145b obtains information on the power of a noise component measured by the RSSI 151 from the RSSI 151. Then, the amplitude adjuster 145b adjusts, based on the obtained information, the amplitude of the noise component outputted from the AD converter 144 so that the power of the noise component is minimized.

In one embodiment, the delay adjuster 145c delays the noise component outputted from the AD converter 144. Accordingly, the delay adjuster 145c causes the length of time taken for the transmitting signal noise component leaking from the divider 115 via the duplexer 121 to the signal combining unit 137 to reach the signal combining unit 137 to agree with the length of time for the transmitting signal noise component outputted from the divider 115 via the signal adjuster 145 to the signal combining unit 137 to reach the signal combining unit 137.

More specifically, the delay adjuster 145c obtains information on the power of a noise component measured by the RSSI 151. Then, the delay adjuster 145c delays, based on the obtained information, the signal component outputted from the AD converter 144 so that the power of the noise component is minimized.

In order to prevent the occurrence of a case where the difference between the strength of the receiving signal and the strength of the noise component is too large for the noise component to be measured, the above calibration is preferably performed in a state where the strength of the receiving signal inputted to the RSSI 151 is small. For example, the calibration is performed when no receiving signal is inputted to the RSSI 151, e.g., before the antenna 122 is installed during manufacturing of the radio communication apparatus 100. Thus, according to the first embodiment, the calibration can be performed while the strength of the noise component is measured with high accuracy.

Also, a switch may be arranged, for example, in the receiving path included in the filter 121b so that the receiving signal outputted from the antenna 122 to the RSSI 151 is cut off in performing the calibration. Thus, according to the first embodiment, even when the radio communication apparatus is operative, the calibration can be performed while the receiving signal is temporarily cut off. Also, according to the first embodiment, a measurement unit (second measurement unit) may be provided to monitor the strength of signal received via the antenna 122, in order to perform the calibration when the strength of the receiving signal becomes a threshold value or less, e.g., when the radio wave condition deteriorates.

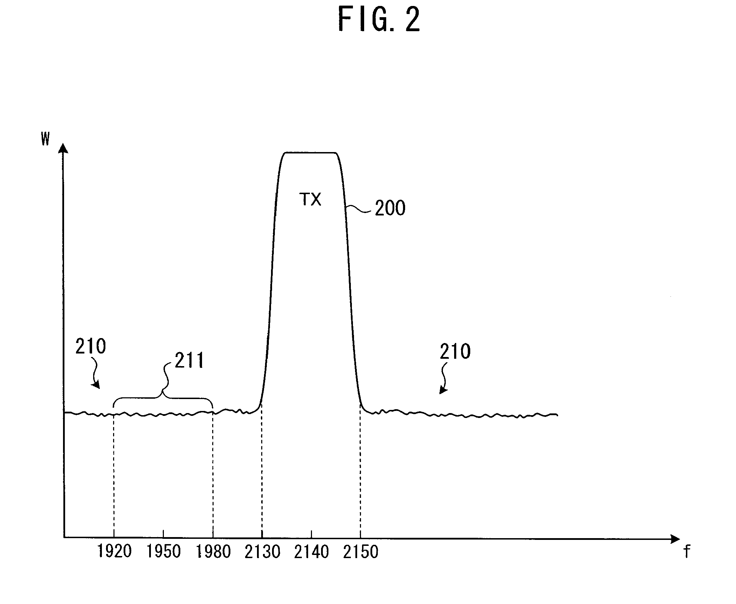

Referring to FIG. 2, transmitting signal frequency (f) is plotted along the abscissa, and transmitting signal power (W), along the ordinate. Reference number 200 denotes a transmitting signal of 2140 plus/minus 10 MHz transmitted by the radio communication apparatus 100. As illustrated in FIG. 2, the transmitting signal 200 includes a noise 210 of a frequency band other than 2140 plus/minus 10 MHz.

This noise 210 also includes a noise 211 of 1950 plus/minus 30 MHz that is the same band as the receiving signal received by the radio communication apparatus 100. The noise 211 leaks from the duplexer 121 to the receiving unit 130. Since the noise 211 (hereinafter referred to as "leak noise") is in the same band as the receiving signal, the noise 211 passes, along with the receiving signal, through the RF bandpass filter 132 and IF bandpass filter 136, and is outputted to the signal combining unit 137.

However, the radio communication apparatus 100 extracts the noise 211 from the dividing transmitting signal 200, and inverts the phase of the noise 211, and combines the phase-inverted noise 211 (hereinafter referred to as "cancel signal") and the receiving signal. Accordingly, the radio communication apparatus 100 can cancel the leak noise included in the receiving signal.

Also, the receiving unit 130 down-converts the receiving signal into the IF band; the cancel signal generation unit 140 also down-converts the transmitting signal 200 into the IF band. Accordingly, both the leak noise and cancel signal change to the IF band, so that the leak noise and cancel signal can be easily made to have reverse phase and identical amplitude relative to each other. Thus, according to the first embodiment, the noise cancel operation can be performed with high accuracy.

In the above description, a configuration was described in which the local oscillator circuit 141 generates a signal of the same frequency (f2) as the signal generated by the local oscillator circuit 133. Alternatively, the local oscillator circuit 141 may generate a variable-frequency signal, for example, a signal of f2 plus/minus 60 MHz.

Accordingly, using the local oscillator circuit 141 and mixer 142, a wide band of noise included in the transmitting signal outputted from the divider 115 can be converted to f1 plus/minus 10 MHz. Thus, the cancel signal generation unit 140 can generate a cancel signal based on a wide band of noise included in the transmitting signal.

There was described the configuration in which the whole transmitting signal 200 is down-converted and then the noise 211 is extracted. According to the first embodiment, however, any configuration can be used in which the noise 211 can be down-converted and extracted. For example, a filter that allows passage of only the signal component of 1950 plus/minus 30 MHz may be arranged in the preceding stage of the mixer 142. As a result, the noise 211 can be extracted from the pre-down-conversion transmitting signal 200, so that the extracted noise 211 is down-converted using the local oscillator circuit 141 and mixer 142.

In the description set forth above, a divider 115 is arranged in the preceding stage of the duplexer 121 to divide the transmitting signal. However, the position at which the transmitting signal is divided is not limited thereto. For example, the divider 115 may be arranged between the duplexer 121 and antenna 122, so that the transmitting signal outputted from the duplexer 121 to the antenna 122 is divided.

In the description of the first embodiment, a configuration in which the signal adjuster 145 is arranged in the cancel signal generation unit 140 to adjust the amplitude and delay of the cancel signal was described. However, the position of the signal adjuster 145 is not limited thereto. For example, the amplitude adjuster 145b and delay adjuster 145c may be arranged in the receiving unit 130 to adjust the amplitude and delay of the receiving signal.

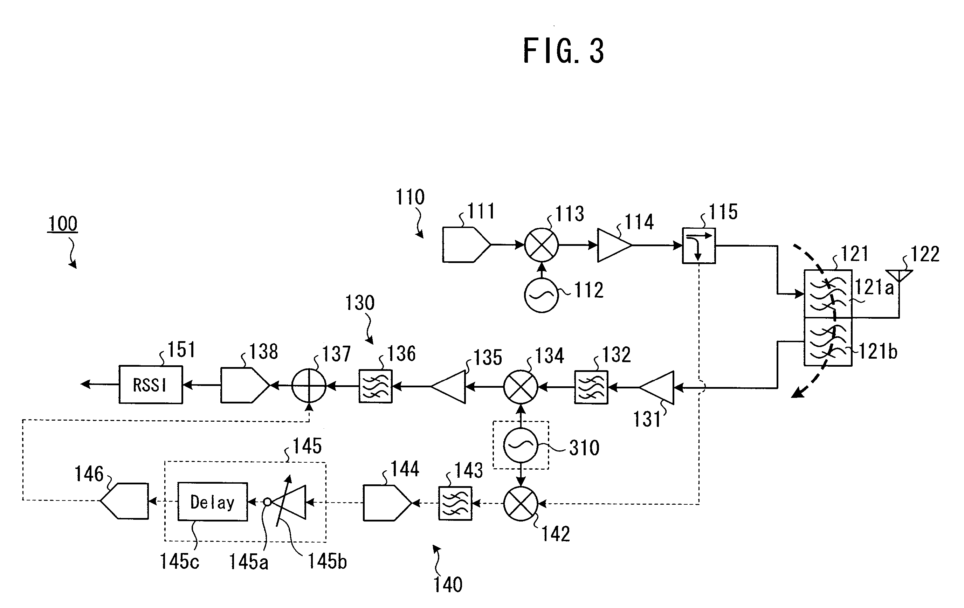

In FIG. 3, the same reference numerals are applied to the elements corresponding to those of FIG. 1, and an explanation thereof is omitted. As illustrated in FIG. 3, the radio communication apparatus 100 according to the first embodiment may include a local oscillator circuit 310 (oscillator circuit), instead of the above local oscillator circuit 133 and local oscillator circuit 141.

According to one embodiment, the local oscillator circuit 310 generates a signal of frequency f2 and outputs the signal to the mixer 134 and mixer 142. The mixer 134 multiplies the receiving signal outputted from the RF bandpass filter 132 by the signal outputted from the local oscillator circuit 310, and outputs the resultant signal to the low-noise amplifier 135. The mixer 142 multiplies the transmitting signal outputted from the divider 115 by the signal outputted from the local oscillator circuit 310, and outputs the resultant signal to the IF bandpass filter 143.

The local oscillator circuit 133 and mixer 134 perform down-conversion similar to that of the local oscillator circuit 141 and mixer 142. Therefore, the local oscillator circuit 133 and local oscillator circuit 141 generate a signal of the same frequency. Thus, according to the first embodiment, the local oscillator circuit 133 and local oscillator circuit 141 can be integrated as the single local oscillator circuit 310.

In this way, the radio communication apparatus 100 according to the first embodiment extracts, as the cancel signal, a noise component of the same band as the receiving signal from the transmitting signal, and combines the receiving signal and the cancel signal, whereby the leak noise included in the receiving signal can be canceled.

Consequently, in the radio communication apparatus 100 according to the first embodiment, the receiving sensitivity at the receiving unit 130 may be improved without increasing the number of resonators in the duplexer 121. Thus, according to the first embodiment, the receiving sensitivity and power efficiency can be improved without increasing the size of the apparatus.

Also, in the radio communication apparatus 100 according to the first embodiment, since the receiving signal and cancel signal are down-converted and combined, the leak noise included in the receiving signal and the cancel signal can be easily made to have reverse phase and identical amplitude relative to each other. Accordingly, according to the first embodiment, the noise cancel operation can be performed with high accuracy.

Further, in the radio communication apparatus 100 according to first embodiment, since the signal adjuster 145 comprises a digital circuit, the calibration can be performed through digital processing with high accuracy and at a high speed. Moreover, according to the first embodiment, since the signal adjuster 145 comprises a digital circuit, apparatus miniaturization and durability improvement can be achieved.

Also, in the radio communication apparatus 100 according to the first embodiment, since the local oscillator circuit 141 generates a variable-frequency signal, a cancel signal may be produced based on a wide band of noise included in the transmitting signal.

In addition, in a variation of the radio communication apparatus 100 according to the first embodiment, since the local oscillator circuit 310 is provided instead of the local oscillator circuit 133 and local oscillator circuit 141, the number of local oscillator circuits may be reduced. Accordingly, according to first embodiment, apparatus miniaturization may be achieved while achieving the above advantageous effects.

### Embodiment 2

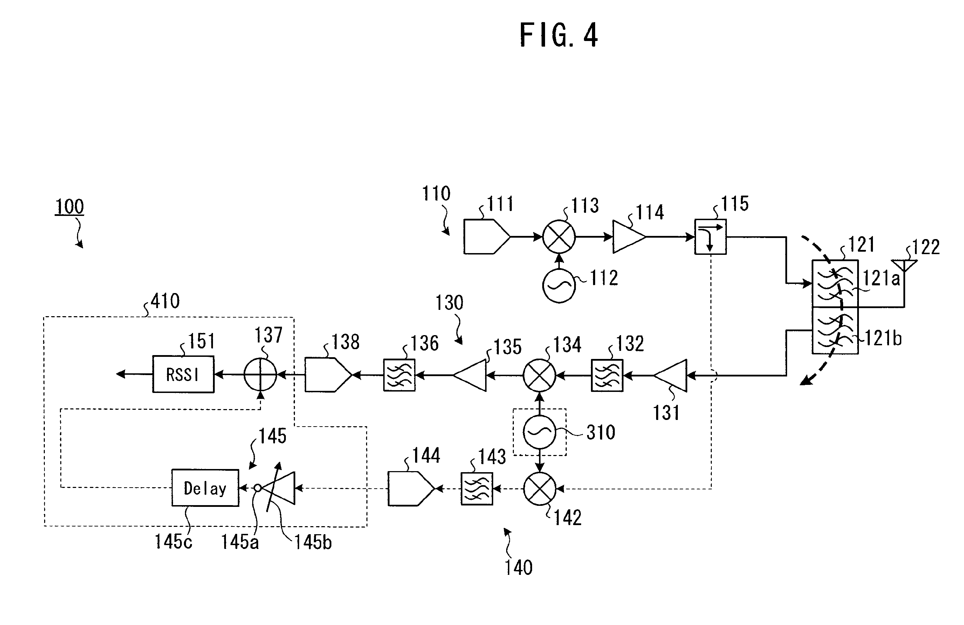

In FIG. 4, the same reference numerals are applied to elements corresponding to those of FIG. 3, and an explanation thereof is omitted. As illustrated in FIG. 4, in a radio communication apparatus 100 according to the second embodiment, a digital circuit 410 such as FPGA constitutes the signal combining unit 137, signal adjuster 145, and RSSI 151. The IF bandpass filter 136 outputs the extracted receiving signal to the AD converter 138.

In this embodiment, the AD converter 138 converts the receiving signal outputted from the IF bandpass filter 136 into a digital signal and outputs the digital signal to the signal combining unit 137. The signal adjuster 145 outputs the cancel signal as a digital signal to the signal combining unit 137. The signal combining unit 137 combines the receiving signal outputted from the AD converter 138 and the cancel signal outputted from the signal adjuster 145, and outputs the resultant signal to the RSSI 151. The RSSI 151 measures the power of the receiving signal outputted from the signal combining unit 137.

In this way, in the radio communication apparatus 100 according to the second embodiment, the cancel signal being a digital signal can be combined with the receiving signal. Accordingly, according to the second embodiment, while the above effects of the first embodiment 1 are achieved, the noise cancel operation may be performed through a digital processing with higher accuracy and at a higher speed. Also, in the radio communication apparatus 100 according to the second embodiment, since the digital circuit 410 constitutes the signal combining unit 137, signal adjuster 145 and RSSI 151, further apparatus miniaturization and durability improvement may be achieved.

### Embodiment 3

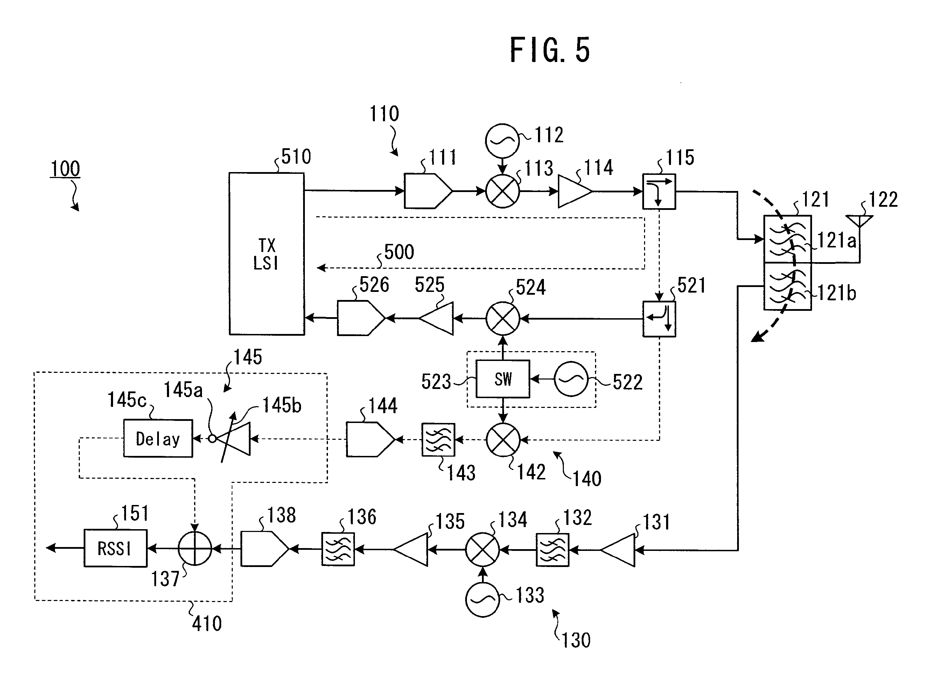

In FIG. 5, the same reference numerals are applied to elements corresponding to those of FIG. 4, and an explanation thereof is omitted. As illustrated in FIG. 5, a radio communication apparatus 100 according to a third embodiment includes a transmission control circuit (TX LSI: Large Scale Integration) 510, divider 521, local oscillator circuit 522, switch (SW) 523, mixer 524, low-noise amplifier 525 and AD converter 526.

According to this embodiment, the transmission control circuit 510, transmitting unit 110, divider 521, local oscillator circuit 522, switch 523, mixer 524, low-noise amplifier 525 and AD converter 526 constitute a DPD (Digital Pre-Distortion) feedback loop 500.

The transmission control circuit 510 produces transmitting data and outputs the data to the DA converter 111. Also, the transmission control circuit 510 monitors a transmitting signal outputted from the AD converter 526 and applies a characteristic reverse to the distortion characteristic of the transmitting signal to the transmitting data to be outputted to the DA converter 111. The divider 521 divides a transmitting signal outputted from the divider 115 and outputs one of the dividing transmitting signals obtained from the divider 521 to the mixer 142, and outputs the other one to the mixer 524.

The local oscillator circuit 522 (second oscillator circuit) selects any of a signal of frequency f3 (not equal to f2, a predetermined frequency) and a signal of frequency f2, and generates the selected signal and outputs the signal to the switch 523. The switch 523 outputs the signal of frequency f3 outputted from the local oscillator circuit 522 to the mixer 524, and the signal of frequency f2 to the mixer 142. The mixer 142 multiplies the transmitting signal outputted from the divider 521 by the signal outputted from the switch 523 and outputs the resultant signal to the IF bandpass filter 143.

The mixer 524 multiplies the transmitting signal outputted from the divider 521 by the signal outputted from the switch 523 and outputs the resultant signal to the low-noise amplifier 525. Here, the transmitting signal outputted from the mixer 524 after multiplication includes a sum component (2140 + f3 ± 10 MHz) and a difference component (2140 - f3 ± 10 MHz (third frequency band)) between the transmitting signal frequency (2140 MHz) outputted from the divider 521 and the signal frequency (f3) outputted from the local oscillator circuit 522.

The low-noise amplifier 525 amplifies the transmitting signal outputted from the mixer 524 and outputs the amplified signal to the AD converter 526. The AD converter 526 converts the transmitting signal outputted from the low-noise amplifier 525 into a digital signal and outputs the digital signal to the transmission control circuit 510. Accordingly, the radio communication apparatus 100 can feedback information on the distortion characteristic of the transmitting signal to the transmission control circuit 510.

In this way, the radio communication apparatus 100 according to the third embodiment can automatically compensate the distortion characteristic of the transmitting signal through the DPD loop 500 while achieving the advantageous effects of the above-described embodiments. Also, in the radio communication apparatus 100 according to the third embodiment, since the local oscillator circuit 522 of the DPD loop 500 doubles as the local oscillator circuit of the cancel signal generation unit 140, the number of local oscillator circuits may be reduced, thus allowing apparatus miniaturization to be achieved.

According to this embodiment, the case where the local oscillator circuit 522 doubles as the local oscillator circuit of the cancel signal generation unit 140 was described. However, the local oscillator circuit 522 may double as the local oscillator circuit 133 of the receiving unit 130. Alternatively, according to the third embodiment, the local oscillator circuit 522 may double as both the local oscillator circuit of the cancel signal generation unit 140 and the local oscillator circuit 133 of the receiving unit 130. In this case, with the third embodiment, the number of local oscillator circuits may be further reduced.

### Embodiment 4

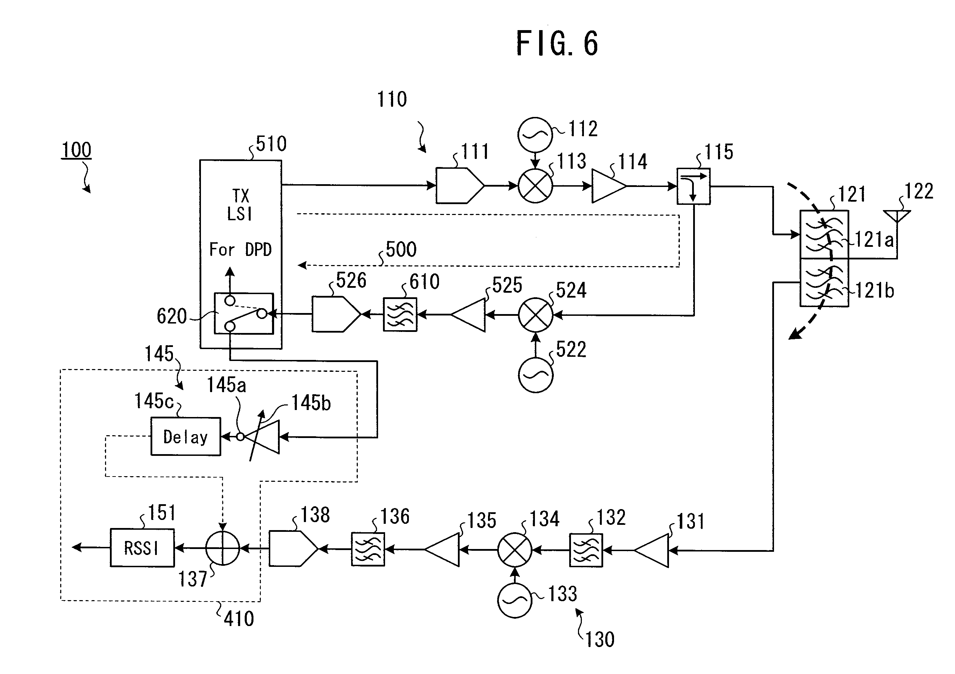

In FIG. 6, the same reference numerals are applied to elements corresponding to those of FIG. 5, and an explanation thereof is omitted. As illustrated in FIG. 6, in a radio communication apparatus 100 according to the fourth embodiment, part of the above cancel signal generation unit 140 is included integrally with the DPD loop 500.

In this embodiment, the local oscillator circuit 522 selects any of a signal of frequency f3 and a signal of frequency f2 and generates the selected signal and outputs the signal to the mixer 524. The mixer 524 (multiplication unit) multiplies a transmitting signal outputted from the divider 115 by a signal outputted from the local oscillator circuit 522 and outputs the resultant signal to the low-noise amplifier 525.

When the local oscillator circuit 522 generates a signal of frequency f3, the transmitting signal outputted from the mixer 524 after multiplication includes a sum component (2140 MHz + f3) and a difference component (2140 MHz - f3) between the transmitting signal frequency (2140 MHz) outputted from the divider 115 and the signal frequency (f3) outputted from the local oscillator circuit 522.

When the local oscillator circuit 522 generates a signal of frequency f2, the transmitting signal outputted from the mixer 524 after multiplication includes a sum component and a difference component between the transmitting signal frequency (2140 MHz) outputted from the divider 115 and the signal frequency (f2) outputted from the local oscillator circuit 522.

A noise of the same band (1950 plus/minus 30 MHz) as the receiving signal frequency included in the transmitting signal is converted into a sum component (1950 + f2 plus/minus 30 MHz) and a difference component (f1 plus/minus 30 MHz). The low-noise amplifier 525 amplifies the transmitting signal outputted from the mixer 524 and outputs the amplified signal to an IF bandpass filter 610.

The IF bandpass filter 610 extracts from the transmitting signal outputted from the low-noise amplifier 525, a difference component (2140 MHz - f3) obtained when the local oscillator circuit 522 generates a signal of frequency f3 and a difference component of noise (f1 plus/minus 10 MHz) obtained when the local oscillator circuit 522 generates a signal of frequency f2.

The IF bandpass filter 610 outputs the extracted signal component to the AD converter 526. The AD converter 526 converts the signal component outputted from the IF bandpass filter 610 into a digital signal and outputs the digital signal to the transmission control circuit 510. The transmission control circuit 510 includes a switch 620 (path switch) which switches the path of the signal component outputted from the AD converter 526.

When the local oscillator circuit 522 generates a signal of frequency f3, the switch 620 switches based on control by the transmission control circuit 510, the path as indicated by the dashed line of FIG. 6 and thereby outputs the transmitting signal outputted from the AD converter 526 to the DPD loop 500. Accordingly, the radio communication apparatus 100 can feedback information on the distortion characteristic of the transmitting signal to the transmission control circuit 510. And when the local oscillator circuit 522 generates a signal of frequency f2, the switch 620 switches the path as indicated by the solid line of FIG. 6 and thereby outputs the noise component outputted from the AD converter 526 to the signal adjuster 145.

The signal adjuster 145 adjusts the noise component outputted from the switch 620. In this way, according to the present embodiment, similarly to the above described embodiments, a noise component of the same band as the receiving signal is extracted as the cancel signal from the transmitting signal and then the receiving signal and cancel signal are combined; thus a leak noise included in the receiving signal can be cancelled.

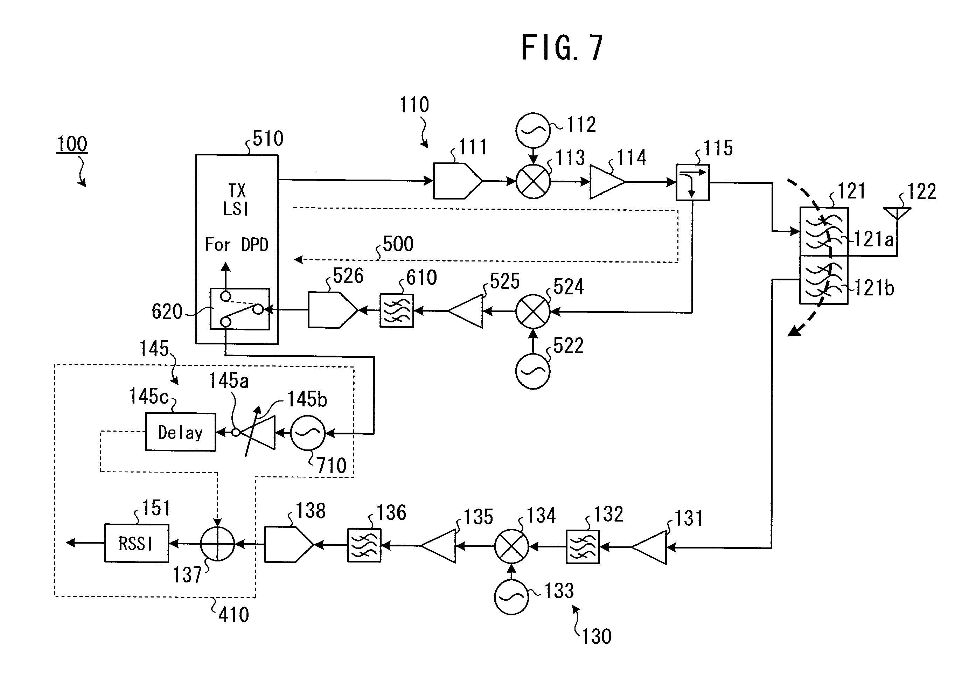

In FIG. 7, the same reference numerals are applied to elements corresponding to those of FIG. 6, and an explanation thereof is omitted. As illustrated in FIG. 7, in a radio communication apparatus 100 according to the fourth embodiment, the local oscillator circuit 522 may generate only a signal of frequency f3. Here, the radio communication apparatus 100 includes a frequency converter 710 (third conversion unit).

When the DPD loop 500 is operated, the switch 620 switches based on control by the transmission control circuit 510, the path as indicated by the dashed line of FIG. 7, so that a transmitting signal outputted from the AD converter 526 is outputted to the DPD loop 500. When the cancel signal generation unit 140 is operated, the switch 620 switches the path as indicated by the solid line of FIG. 7, so that a transmitting signal outputted from the AD converter 526 is outputted to the frequency converter 710.

The frequency converter 710 converts the transmitting signal of 2140 - f3 outputted from the AD converter 526 into a band of f1 plus/minus 10 MHz, and outputs the band-converted transmitting signal as the noise component to the signal adjuster 145. Here, the frequency converter 710 comprises a NCO (Numerically Controlled Oscillators). The signal adjuster 145 inverts the noise component outputted from the frequency converter 710 and adjusts its amplitude and delay.

In this variation, the switch 620 may be replaced with a divider (second dividing unit); the divider divides the transmitting signal outputted from the AD converter 526 and outputs respective dividing signals to the DPD loop 500 and cancel signal generation unit 140. According to this variation having the above configuration, distortion compensation by the DPD loop 500 and noise cancellation by the cancel signal generation unit 140 can be simultaneously performed.

In the radio communication apparatus 100 according to the fourth embodiment, part of the cancel signal generation unit 140 can be included integrally with the DPD loop 500. Thus, according to fourth embodiment, while the advantageous effects of the above described embodiments are achieved, the number of circuit elements can be reduced, achieving apparatus miniaturization.

As described above, the radio communication apparatus according to the present apparatus can produce a cancel signal from the transmitting signal and combines the receiving signal and the cancel signal, whereby a leak noise included in the receiving signal can be canceled. Accordingly, the present apparatus can improve receiving sensitivity without increasing the number of resonators in the duplexer. Thus, according to the present apparatus, receiving sensitivity and power efficiency can be improved without increasing the size of the apparatus.

Although the embodiment has been described with reference to particular embodiments, it will be understood to those skilled in the art that the invention is capable of a variety of alternative embodiments within the scope of the appended claims. Moreover, not all disclosed aspects need to be included in any single embodiment.

## Claims

1. A radio communication apparatus that transmits and receives a signal via an antenna duplexer, the apparatus comprising:
a dividing unit dividing part of a transmitting signal to be transmitted via the antenna duplexer;
a conversion unit converting a receiving signal of a first frequency band received via the antenna duplexer into a second frequency band lower than the first frequency band;
an extraction unit converting a noise component of the first frequency band included in the transmitting signal divided by the dividing unit into the second frequency band and extracting the noise component;
an inversion unit inverting the phase of the noise component extracted by the extraction unit; and
a combining unit combining the receiving signal converted by the conversion unit and the noise component inverted by the inversion unit.

2. The radio communication apparatus according to claim 1, further comprising:
a measurement unit measuring the strength of a combining signal obtained via the combining unit; and
an adjustment unit adjusting at least one of the receiving signal and the noise component so that the strength of the combining signal measured by the measurement unit is minimized.

3. The radio communication apparatus according to claim 2, wherein the adjustment unit delays at least one of the receiving signal and the noise component so that the strength of the combining signal is minimized.

4. The radio communication apparatus according to claim 2, wherein the adjustment unit adjusts the amplitude of at least one of the receiving signal and the noise component so that the strength of the combining signal is minimized.

5. The radio communication apparatus according to claim 2, further comprising a switch for cutting off the receiving signal received via the antenna duplexer, wherein the adjustment unit performs the adjustment when the receiving signal has been cut off by the switch.

6. The radio communication apparatus according to claim 2, further comprising a second measurement unit measuring the strength of the receiving signal received via the antenna duplexer, wherein the adjustment unit performs the adjustment when the strength of the receiving signal is a threshold value or less.

7. The radio communication apparatus according to any preceding claim, further comprising a digital conversion unit converting the noise component extracted by the extraction unit, wherein the inversion unit inverts the phase of the noise component through a digital processing.

8. The radio communication apparatus according to any of claims 2 to 6, wherein the adjustment unit adjusts the noise component through a digital processing.

9. The radio communication apparatus according to claim 8, further comprising a demodulation unit applying demodulation to the receiving signal converted by the conversion unit and converting the resultant signal into a digital signal,
wherein the combining unit combines the receiving signal converted into a digital signal by the demodulation unit with the noise component inverted by the inversion unit, and
wherein the inversion unit, measurement unit, adjustment unit and combining unit are constituted using FPGA.

10. The radio communication apparatus according to claim 1,
wherein the conversion unit converts the receiving signal into the second frequency band by multiplying the receiving signal by a signal of a difference frequency between the first frequency band and the second frequency band, and
wherein the extraction unit multiplies the noise component by a signal of the difference frequency and thereby converts the noise component into the second frequency band.

11. The radio communication apparatus according to claim 10, further comprising an oscillator circuit that generates a signal of a variable frequency including the difference frequency,
wherein the extraction unit multiplies the signal generated by the oscillator circuit.

12. The radio communication apparatus according to claim 10, further comprising an oscillator circuit that generates a signal of the difference frequency,
wherein the conversion unit and the extraction unit multiply the signal generated by the oscillator circuit.

13. The radio communication apparatus according to claim 10, further comprising:
a second conversion unit converting the transmitting signal to be transmitted via the antenna duplexer into a third frequency band by multiplying the transmitting signal by a signal of a predetermined frequency; and
a distortion compensation unit monitoring the distortion characteristic of the transmitting signal converted by the second conversion unit and compensating based on the distortion characteristic, distortion of the transmitting signal to be transmitted via antenna duplexer.

14. The radio communication apparatus according to claim 13, further comprising a second oscillator circuit which selects any of a signal of the difference frequency and a signal of the predetermined frequency and generates the selected signal,
wherein the second conversion unit multiplies the signal of the predetermined frequency generated by the second oscillator circuit, and
wherein at least one of the conversion unit and the extraction unit multiplies the signal of the predetermined frequency generated by the second oscillator circuit.

15. The radio communication apparatus according to claim 13,
wherein the extraction unit and the second conversion unit comprise:
a multiplication unit selecting any of the signal of the difference frequency and the signal of the predetermined frequency and multiplying the transmitting signal divided by the dividing unit by the selected signal; and
a filter which extracts the noise component of the second frequency band and the transmitting signal of the third frequency band from the transmitting signal multiplied by the multiplication unit.

16. The radio communication apparatus according to claim 15, further comprising a path switch which, according to the signal selection by the multiplication unit, outputs the noise component of the second frequency band extracted by the extraction unit to the combining unit and also outputs the transmitting signal of the third frequency band to the distortion compensation unit.

17. The radio communication apparatus according to claim 13,
wherein the extraction unit and the second conversion unit comprise:
a multiplication unit multiplying the transmitting signal divided by the dividing unit by the signal of the predetermined frequency;
a filter that extracts the noise component of the second frequency band and the transmitting signal of the third frequency band from the transmitting signal multiplied by the multiplication unit; and
a third conversion unit converting the frequency band of the noise component extracted by the filter into the second frequency band.

18. The radio communication apparatus according to claim 17, further comprising second dividing unit dividing the signal component extracted by the extraction unit and outputting the dividing signal component to the third conversion unit and the distortion compensation unit.
